# EUROPEAN PATENT APPLICATION

(11) **EP 1 860 601 A2**
(43) Date of publication of application: **28.11.2007**
(21) Application number: 07008440.5
(22) Date of filing: 25.04.2007
(51) Int. Cl.: G06Q 10/00

(54) **System and method for automated configuration and deployment of applications**

(30) Priority: 24.05.2006 US 441302
(71) Applicant: SAP AG, 69190 Walldorf (DE)
(72) Inventor: Burdett, David H., CA 94563 Orinda (US); Frankel, David S., Chico, CA 95973 (US); Stuhec, Gunther, 69118 Heidelberg (DE); Dubray, Jean-Jacques, Sammamish, Washington 98074 (US); Raepple, Martin, 64686 Lautertal (DE)
(74) Representative: Müller-Boré & Partner Patentanwälte

(57) **Abstract**

A system and method are described for automated configuration and deployment of applications. Each participant to a transaction maintains "connection parameters" which contain an indication of the various connection capabilities (protocols, file formats, document sequences, etc) of that participant. Prior to entering into a series of transactions (e.g., document exchanges), the connection parameters of two or more of the participants are compared to identify a common subset that are then exchanged between the participants until both participants agree on the connection parameters to use. The agreed upon connection parameters are stored within a "connection agreement" which is then used to automatically configure the applications (e.g., business collaboration applications) executed by each participant.

## Description

### BACKGROUND

### Field of the Invention

This invention relates generally to the field of data processing systems. More particularly, the invention relates to a system and method for automated negotiation and agreement, of connection parameters that are used in the configuration, deployment and operation of applications such as service-oriented applications or Web-service applications.

### Description of the Related Art

The exchange of business documents such as orders and invoices between business partners is a fundamental part of commerce. For centuries these documents were exchanged in paper format. For the past 30+ years these documents have been exchanged in electronic form and in the past 5-8 years the documents have been represented in Extensible Markup Language ("XML") and exchanged over the Internet.

However, the exchange of business documents electronically requires that all the participants have software that is configured to process the documents correctly. At the highest level, both participants must configure in a compatible way: (1) the format and structure of the documents they exchange (e.g., the representation of an Order in XML); (2) the sequence in which documents are exchanged (e.g., for every order sent by a buyer to a seller the seller should return an order response document); and (3) the technology used to transport the document securely and reliably between the participants (e.g., using standard protocols over the Internet). Each participant needs to specify this information in detail in a way that is compatible with the other participants with whom they exchange business documents. In addition, each pair of participants may agree to specify this information differently from every other. As a result, using current technology each participant must separately and independently configure their software to behave correctly. If this is not done, problems will occur and the exchange of business documents will not be successful.

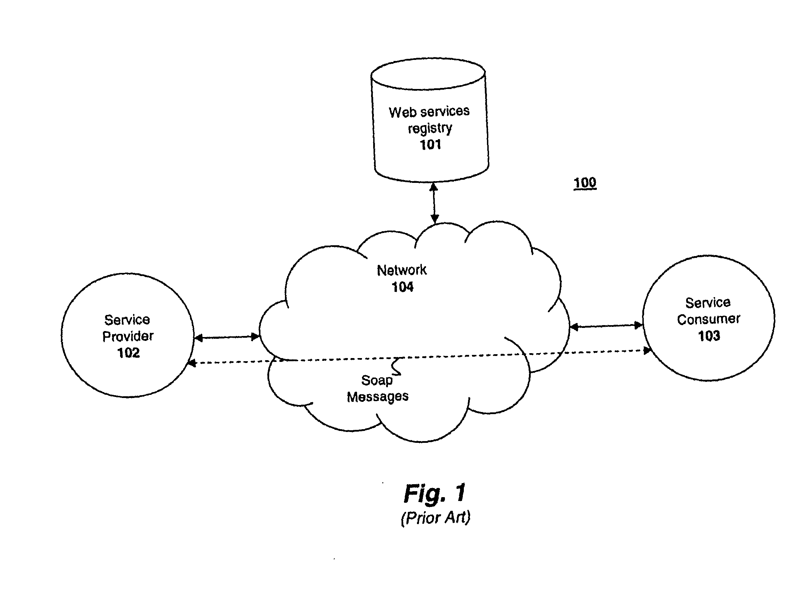

A "Web services" architecture may be used to address some of the foregoing problems. Figure 1 provides a high level architecture of a Web services interaction including a registry 101, a service provider 102 and a service consumer 103. A service consumer 103, or "service requestor," is generally understood to be an entity that seeks and - in cases where a suitable Web service is found - uses a particular Web service through a network 104 (e.g., the Internet). The registry 101 includes listings of various "available" services, and may assist the service consumer 103 in searching for a suitable service provider based on the requirements of the service consumer 103. The service provider 102 provides Web services to consumers over the network 104. Because of the vast expanse of the internet and interest in automated business engagements, many registries, service consumers and service providers may be in operation at any instant of time.

Presently, the responsibilities of the most prevalent registry function 101 associated with the Web services effort are defined in various Universal Discovery, Description and Integration ("UDDI") specifications (currently provided at uddi.org). Besides providing listings of available services, a UDDI registry 101 may also make available to a service consumer 103 additional details that pertain to any particular Web service such as the location of the Web service (e.g., its URI specified by a specific network destination address or name); the capabilities of the Web service (e.g., specific methods and formats that are supported by the Web service and that may be called upon by the service consumer), and communication semantics needed for invoking the Web service through the network 104 (e.g., the structure of a messaging format and/or protocol needed to properly communicate with the Web service).

According to one widely adopted approach, these additional details are described in Web Services Definition Language ("WSDL") text documents written in XML. Here, for example, for each Web service listed in the registry 101, the registry 101 also maintains a WSDL document that describes the location, capabilities and communication semantics of the Web service. Presently, a WSDL document for a particular Web service is expected to include an "abstract interface" description of the Web service (which includes the Web service's methods and the data passed between the Web service provider and Web service consumer) and a "concrete implementation" description of the Web service (which includes specific protocol and data format specifications for communicating with the Web service (referred to as a "binding") and the location of the Web service (referred to as a "port")).

In operation, the Web service consumer 103 downloads the WSDL document from the registry 101 and analyzes the WSDL file to determine the communication protocols and messaging schemes (i.e., the "schema") required to interact with the Web services provider 102. The Web service consumer 103 then uses this information to configure its local "client side" Web services applications.

Although standardized approaches such as Web services can help reduce the compatibility problems mentioned above, these approaches cannot remove them entirely, given the potentially large amount of information that needs to be configured for a complex business interaction between participants. Consequently, these difficulties are slowing the rate at which businesses collaborate by implementing the exchange of business documents electronically. For smaller businesses the problem is severe in that they rarely have the skills or expertise required to configure the software they need. The result is increased costs and slower rates of adoption of web services and related technologies. This has the effect of reducing the supply chain efficiencies that could occur if businesses could more easily exchange business documents securely and reliably over the Internet.

As a result, using Web Services and other known technologies to build systems or connect businesses together is much harder and takes much longer than it needs to be.

### SUMMARY

A system and method are described for automated configuration and deployment of applications. For example, in one embodiment of the invention, each participant to an online transaction maintains a set of "connection capabilities" which contain an indication of the various protocols, file formats, document sequences, etc supported by that participant. Prior to entering into a series of online transactions (e.g., document exchanges), the connection capabilities of two or more of the participants are compared to identify a common subset of the connection parameters contained within the connection capabilities. The agreed upon connection parameters are stored within a "connection agreement" which is then used to automatically configure the applications (e.g., business collaboration applications) executed by each participant.

### BRIEF DESCRIPTION OF THE DRAWINGS

A better understanding of the present invention can be obtained from the following detailed description in conjunction with the following drawings, in which:

**FIG. 1** illustrates a standard Web services architecture.

**FIG. 2** illustrates one embodiment of the invention for configuring connection parameters between two companies.

**FIG. 3** illustrates a more detailed system and method for configuring connection parameters between two companies.

### DETAILED DESCRIPTION OF PREFERRED EMBODIMENTS

Described below is a system and method for automated negotiation, agreement, configuration, and/or deployment for business collaborations. Throughout the description, for the purposes of explanation, numerous specific details are set forth in order to provide a thorough understanding of the present invention. It will be apparent, however, to one skilled in the art that the present invention may be practiced without some of these specific details. In other instances, well-known structures and devices are shown in block diagram form to avoid obscuring the underlying principles of the present invention.

Unlike a standard Web services transaction in which a Web service provider dictates the connectivity parameters to Web service consumers, one embodiment of the present invention allows all participants to a transaction to negotiate connectivity parameters with one another. As a result, the participant's business transactions may be configured in a more adaptable, dynamic manner than in prior systems.

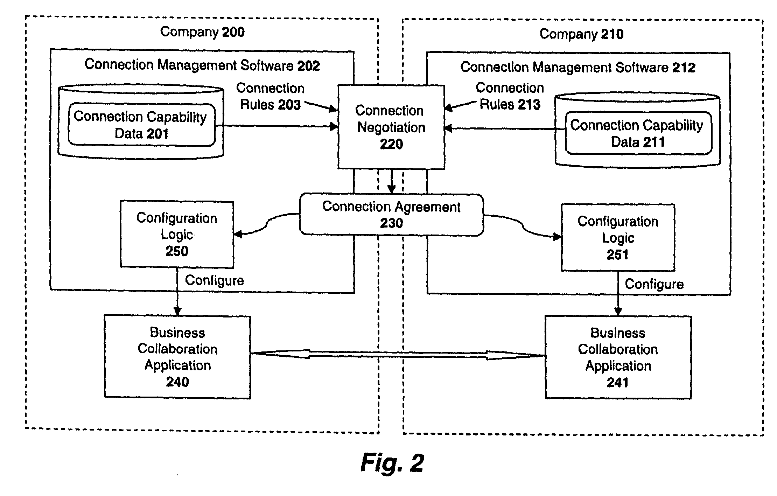

**Figure 2** illustrates one embodiment of the invention which provides for the automatic configuration of business collaboration applications 240 and 241, executed at two different companies, 200 and 210, respectively. In this embodiment, the two companies 200 and 210 maintain an indication of the connection capabilities of their respective business collaboration applications 240 and 241, in the form of sets of "connection capability data" 201 and 211, respectively. A detailed description of the information contained within the connection capability data is provided below but, briefly, this data contains information defining some or all of: the collaborative business processes supported by the companies (e.g., the sequence in which messages may be exchanged); the business documents to be exchanged (e.g., the semantics for all the data elements/attributes contained in the business documents); the messaging technology that will be used (e.g., transport protocols such as HTTP and/or SMTP); information related to the identity of the participants in the process (e.g., methods for identifying a participant at different levels); service-level related information (e.g., the expected/required response time for individual messages); and contract/terms-of-business information (e.g., the business terms and conditions under which the collaborative business process is executed).

In one embodiment, each company includes multiple sets of connection capability data relevant to different types of connections. In this embodiment, when two companies start a negotiation they only exchange connection capability data that is relevant to the type of connection being set up. For example when connecting to a bank, a company might send information related to its ability to perform automatic payments. By contrast, when connecting to a supplier, the same company might only expose data related to how it can place orders.

In one embodiment, the connection capability data is formatted according to the XML standard, although any file format may be used. For that matter, a "file" is not even required for complying with the underlying principles of the invention. For example, in one embodiment, the connection capabilities of each company 200 and 210 may be stored within a relational database or other type of organization and/or structure for storing data.

In the embodiment illustrated in Figure 2, prior to the initiation of business transactions, connection negotiation logic 220 executed on Connection Management Software 202 and 212 at one or both of the companies compares the two sets of connection capability data 201 and 211 and responsively generates a new set of data, referred to herein as a "connection agreement" 230. When constructing the connection agreement 230, the connection negotiation logic 220 parses each of the sets of connection capability data 201 and 211, and identifies a set of connection parameters shared by the two business collaboration applications 240 and 241. Thus, the connection agreement 230 contains an agreed-upon common subset of the connection capabilities of both business collaboration applications 240 and 241.

In the event that the business collaboration applications 240 and 241 share multiple connection capabilities within the same category (e.g., both are capable of communicating with HTTP and SMTP) then the connection negotiation logic 220 implements a prioritization scheme to determine a "preferred" set of connection parameters to include within the connection agreement 230. The prioritization scheme may be specified within the connection capability data 201, 211 and/or within separate connection prioritization rules 203, 213 held by one or both companies. For example, the business collaboration application 240 for company 200 may support business documents of both type A and of type B. However, company 200 prefers to use type A documents because they contain additional useful information when compared with documents of type B. In this case, company 200 would prefer to use documents of type A and therefore give them a higher priority. Next, if the business collaboration application 241 for company 210 supports both type A and type B documents, and has no preference on which to use, the connection negotiation logic would result in type A documents being selected. On the other hand, if company 210 only supported type B documents, then type B documents would be selected as only type B documents are supported by both companies.

Moreover, in one embodiment, the connection negotiation logic 220 evaluates dependencies between the connectivity parameters stored within each set of connection capability data. For example, the business collaboration application 240 for company 200 may support Type A business documents with the HTTP transport protocol and Type B documents with the SMTP transport protocol. If the business application 241 for company 210 only supported Type B documents with the HTTP protocol, and no other combination, then a connection agreement could not be built since there is no common subset without either company 200 or company 210 building additional capabilities into their business collaboration applications.

As indicated in **Figure 2**, once the connection agreement is generated, it is used by configuration logic, 250 and 251 to configure each of the business collaboration applications 240 and 241. Once configured, the two companies may then communicate and exchange documents using the agreed-upon set of connection parameters.

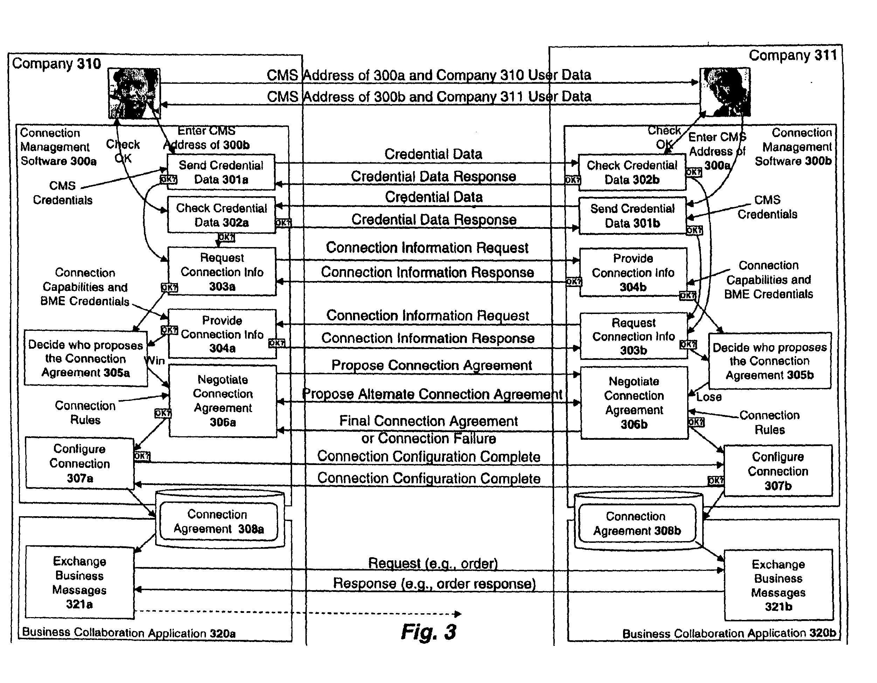

A more detailed series of transactions for negotiating a connection agreement is illustrated in **Figure 3**. At a high level, Company 310 has Connection Management Software 300a which negotiates and manages connections with the Connection Management Software 300b that is used by Company 311. The result of the negotiation is a Connection Agreement 308 which is used to configure one or more Business Collaboration Applications 320a and 320b.

Prior to entering into the negotiation process shown, both Company 310 and Company 311 may initially create Connection Management Software (CMS) credentials that contain signature and encryption private/public key pairs that are used by the Connection Management Software to secure the messages exchanged by the company when negotiating a connection. They may also create one or more business message exchange (BME) credentials that are used to secure business messages such as orders or order responses that are exchanged between their Business Collaboration Applications 320a and 320b. Each company stores the CMS and BME credentials they create in their Connection Management Software 300. Alternatively, in one embodiment, one or both companies can acquire public digital certificates signed by one or more trusted certificate authorities ("CAs"). Obtaining of credentials may be a one-time activity for each company.

Once BME and CMS credentials have been obtained and stored, the companies can start the negotiation process by exchanging HTTP and/or email addresses. More specifically, in one embodiment of the invention, a user from company 311 sends (or tells) the user from company 310 the HTTP and/or email application address that is used by their company's Connection Management Software, to receive messages that are used to configure company 311's Business Collaboration Applications. In another embodiment of the invention, a user from company 311 may also provide to the user in company 310 information about themselves which may include but is not limited to: their company's name, their own name, their own telephone number, and their own email address. Once received, company 310 user enters the CMS Address of 300b into their connection management software 300a.

At step 301 a, the Connection Management Software 300a for company 310 then sends to company 311's Connection Management Software 300b, a Credential Data message containing: the CMS Credentials that had been previously created for Company 310; details about Company 311 that was provided to the Company 310 user by the Company 311 user including one or more of the Company 311's name, user's own name, user's own email address and user's own telephone; Company 310's name, user's own name, user's own email address and user's own telephone, and a digital signature that signs the Credential Data message using the private key whose public key is contained in the CMS Credentials that are sent in the message . CMS 300a may also send an email notification that the credentials had been sent to the Company 311 user's own email address if one was provided.

At step 302b, the Connection Management Software for company 311 checks the company 310 CMS credentials and, if acceptable, authorizes that the CMS credentials received from CMS 300a be used for negotiating connections between Company 310 and Company 311. In one embodiment of the approach, checking the CMS credentials consists of the Connection Management Software 300a checking the digital signature on the CMS credentials using the certificate contained in the CMS credentials to verify that Company 310 possesses the corresponding private key. In another embodiment of the approach, as well as checking the digital signature on the credentials, CMS 300a checks the certificate authority that signed the public key certificate used by company 310 to determine if the certificate authority is known and trusted by company 311. In yet another embodiment of the approach, checking of the CMS credentials requires, either in addition or as an alternative, that the user at company 311 visually inspects the information in the Credential Data message to check that information such as company name, user name, telephone number etc is as they expect based on the initial conversation with the user at Company 310. The type of checking that occurs on an individual set of CMS Credentials may vary depending on the Connection Rules that the company follows as described in **Figure 2.** If the CMS software and/or the user decide that the Credential Data message is not acceptable, then company 311 may either, notify the company 310 user (e.g., on their personal email address or by telephone); and/or send a Credential Data Failure message back to Company 310's Connection Management Software 300a. If the Credential Data Message is acceptable, then CMS 300b sends a Credential Data Response message to CMS 300a that indicates that the Credential Data was accepted.

At steps 301 b and 302a the same process as described in the previous paragraphs is followed with the roles and steps of Companies 310 and 311 reversed.

If Company 310 accepted the Credential Data they received from Company 311 and they have received a Credential Data Response message from Company 311 indicating that the Credential Data they sent to Company 311 was accepted, then Company 310 is ready to start their negotiation of the connection agreement with Company 311. Similarly, If Company 311 accepted the Credential Data they received from Company 310 and they have received a Credential Data Response message from Company 310 indicating that the Credential Data they sent to Company 310 was accepted, then Company 311 is also ready to start their negotiation of the connection agreement with Company 310. Only if both Companies are ready to proceed with the negotiation can the negotiation start as described in the following paragraphs.

At step 303a, CMS 300a uses the CMS Credentials exchanged with Company 311 to secure, by digitally signing and encrypting, a Connection Information Request which is sent to CMS 300b. At step 304b, the Connection Information Request received from CMS 300a is checked by CMS 300b. In one embodiment of the approach, checking the Connection Information Request consists of the Connection Management Software 300b checking the digital signature to check that it was signed using the private key whose public key was contained in the CMS credentials that were exchanged earlier with Company 310. In yet another embodiment of the approach, checking of the Connection Information Request requires, either in addition or as an alternative, that the user at company 311 visually inspects the information in the Connection Information Request message to check that information such as company name, user name, telephone number etc is as they expect based on the initial conversation with the user at Company 310. The type of checking that occurs on an individual set of Connection Information Request message may vary depending on the Connection Rules that the company follows as described in **Figure 2**.

If the Connection Information Request is not acceptable then CMS 300b in step 304b may send a Connection Information Error message (not shown) to CMS 300b and the connection negotiation process stops. On the other hand, if the Connection Information Request is accepted. Then CMS 300b, in step 304b, sends a Connection Information Response containing Connection Capability Data (CCD) that is secured using the CMS credentials exchanged with Company 310, back to CMS 300a. CMS 300a receives the response and determines if it is acceptable. Checking for acceptability may include, but is not limited to: checking that the Connection Information Response is related to the earlier Connection Information Request; and using a similar approach to that used by CMS 300b to check the Connection Information Request. Note that each set of Connection Capability Data that is sent has an identifier that can be used to identify it.

If the CCD is not accepted, then CMS 300a may send a Connection Information Error message to CMS 300b (not shown) and the connection negotiation process stops. If the CCD is acceptable then CMS 300a saves the CCD it has received. The CCD may include among other information, a company name, address, admin contact name, address, email, etc; business documents and processes that CMS 300b supports for the connection being built; the type and version of the business collaboration application that they use; and the business message exchange (BME) credentials as described earlier.

The same interactions as those just described also occur at steps 303b and 304a with the roles of Company 310 and 311 reversed.

Assuming that the exchange of Connection Capability Data was successful, a determination must be made (see steps 305a and 305b) as to which Connection Management Software generates the initial Connection Agreement that proposes how Business Collaboration Applications 320a and 320b will connect. Only one CMS should "win" and so make an initial proposal for the Connection Agreement that both will use to configure the Business Collaboration Applications 320a and 320b. In one embodiment of the invention, each CMS executes the following set of tests to make the determination:
If one of the Business Collaboration Applications (BCA) for which a connection agreement is being negotiated has more limited flexibility than the other in terms of the types the connection capabilities it supports, then the BCA with least flexibility proposes the initial Connection Agreement
If both BCAs have equal flexibility, then the CMS software with the later software version proposes the initial Connection Agreement
If the versions of the CMS software are the same, then the CMS that sent the Connection Information Response message with the earliest timestamp proposes the initial Connection Agreement
If by some fluke the timestamps on the Connection Info Response are the same then the CMS that sent the Connection Capability Data containing data with the lowest Connection Capability Data Identifier value proposes the Connection Agreement.

The remainder of this description will assume that CMS 300a wins (although the same general principles would apply if CMS 300b had won).

At steps 306a and 306b, the Connection Management Software 300a and 300b, respectively, negotiate the Connection Agreement to be used to configure Business Collaboration Applications 320a and 320b. Specifically, in the illustrated example, CMS 300a, since it "won" compares CMS 300b's Connection Capability Data (sent via CMS 300b's Connection Information Response) with the Connection Capability Data it sent to CMS 300b to generate an initial Connection Agreement (e.g., as described above with respect to Figure 2). It then sends the initial Connection Agreement to CMS 300b in the form of a "Proposed Connection Agreement" message. When CMS 300b receives this message it checks to determine if the Proposed Connection Agreement is acceptable. This may include checking that the proposed Connection Agreement is secured using the CMS credentials exchanged earlier. If the checks are passed, then CMS 300b sends a "Final Connection Agreement" message to CMS 300a indicating negotiation success.

If, however, the proposed Connection Agreement is not acceptable, then either: CMS 300b sends a Connection Failure message indicating a negotiation failure; or, CMS 300b proposes an alternate Connection Agreement in a Propose Alternate Connection Agreement message and sends it to CMS 300a. For example, CMS 300b may adapt the Connection Agreement proposed by CMS 300a based on its own "preferred" set of connectivity protocols. CMS 300a may then check the alternate Connection Agreement and, if it is still not acceptable, propose another alternate Connection Agreement until either CMS 300a or CMS 300b sends either a Final Connection Agreement message indicating negotiation success or a Connection Failure message indicating negotiation failure. All the messages that are exchanged are secured using the CMS Credentials exchanged earlier.

If the negotiation was a success, then CMS 300a uses the final version of the Connection Agreement, see step 307a, to configure how its Business Collaboration Application 320a connects with Business Collaboration Application 320b. Once CMS 300a's Business Collaboration Application has been configured, CMS 300a sends a Connection Configuration Complete message to CMS 300b. Similarly, once CMS 300b's Business Collaboration Application has been configured, CMS 300b sends a Connection Configuration Complete message to CMS 300a. Once both CMS 300a and 300b have configured their connections and both received the Connection Configuration Complete message then they each set the status of the connection to "active" and the Business Collaboration Applications 320a and 320b can now start exchanging business messages such as orders, order responses, etc., according to the mutually agreed upon connection parameters.

In one embodiment of the approach, the users in Company 310 and 311 at the very start of the process also exchange identifiers of one or more business collaborations or business processes for which the Companies want to negotiate a connection agreement. These identifiers are then entered into the Connection Management Software to limit the areas of collaboration for which a Connection Agreement will be negotiated. In this way, for example, the companies could limit negotiation to order processing and exclude invoice/payment processing.

In one embodiment of the approach, the exchange of CMS Credentials (steps 301 and 302) occurs just once. Later there are multiple occurrences of negotiating a Connection Agreement (steps 303 through 307) that use those CMS credentials in negotiating multiple connection agreements for multiple different Business Collaboration Applications potentially supporting multiple different processes and collaborations.

In one embodiment of the approach, one negotiation (steps 303 through 307) determines a connection agreement that applies to more than one Business Collaboration Application.

In one embodiment of the approach, Company 310 and Company 311 are the same company. Also the users who exchange information may be the same person. An example use of this is when negotiating a Connection Agreement between two Business Collaboration Applications operated by the same company.

In one embodiment of the approach none of the messages exchanged as part of negotiation (steps 303 through 307) are secured using CMS Credentials. This may be used, for example when both companies are the same and the messages are being sent over private, secured and trusted networks.

In one embodiment of the approach, the exchange of Credentials Data (steps 301 and 302) does not occur and the address of the Connection Management Software is entered either directly by the user into step 303, or retrieved from a database.

In one embodiment of the approach, a connection agreement has a start date/time before which the connection agreement is not valid and an end date/time after which the connection agreement is no longer to be used.

In one embodiment of the approach, an existing connection agreement is renegotiated by conducting a new negotiation (steps 303 through 307) that identifies it is replacing an existing connection agreement. This negotiation may occur in advance of any end date/time on the existing connection agreement and may contain a start date/time in the future from which the renegotiated connection agreement is to come into effect.

In one embodiment of the approach, CMS Credential data that is exchanged between Company 310 and 311 (see steps 301 and 302) has a start date/time before which the CMS Credential data may not be used and an end date/time after which the CMS Credential data is no longer to be used.

In one embodiment of the approach, CMS Credential data may be replaced by new CMS Credential data, for example because the end date/time for the CMS Credential data has passed. In this case, a new Credential Data message may be sent and steps 301 and 302 repeated.

In one embodiment the replacement of connection agreements and/or CMS Credential data may be triggered automatically because the end date/time of the data has either passed or is at some near point in the future.

In one embodiment of the invention in response to changes to the Connection Capability Data or CMS Credentials of one participant, software executed by that participant automatically informs all other participants of changes to the Connection Capability Data or CMS Credentials so that re-negotiation of the Connection Agreement automatically occurs.

In one embodiment of the approach, an existing connection agreement or CMS credentials may be canceled by one company sending the other company a Connection Agreement Cancellation message or Credential Data Cancellation message (not shown). In this case the company that receives the cancellation message checks that the cancellation is acceptable and then sends a Connection Agreement Cancellation Response message or Credential Data Cancellation Response message in return to indicate that the cancellation message was received.

In one embodiment of the approach, the steps just described use CMS Addresses that are neither HTTP or email addresses. Instead, messages are exchanged using some other messaging protocol.

In one embodiment of the approach, a user in one of the companies, for example Company 310, provides the user in the other company for example Company 311, the http address of a web site that the user in company 311 can visit to enter data about the Company 311 including, but not limited to: the name of company 311, and the user's own name, user's own email address and user's own telephone as well as the address of the Company 311's connection management software and credentials data. Once this information has been entered Company 310 starts the exchange of CMS Credentials (step 301 a) in the same was as if a user at Company 310 had entered the data into their Connection Management Software 300a. This approach can be used when a company, e.g. Company 310, wants to automatically accept connections with other companies.

As previously mentioned, the Connection Capability Data and Connection Agreements can include, but are not limited to, the following information:
1. The Collaborative Business Process Supported. This includes, for example:
   (a) The context in which the business process takes part (e.g., participants, industry, locale, etc)
   (b) The sequence in which messages may be exchanged, often referred to as a "choreography"
   (c) The business rules that determine the sequence in which messages are exchanged (often described as part of the choreography)
   (d) The semantics associated with the "sending" of a message
   (e) How errors and exceptions in the execution of the choreography are handled
2. The business documents exchanged that are required by the choreography. This information may include, for example:
   a) The context in which the business documents are used (e.g., participants, industry, locale, etc)
   a) The syntax of the wire representation of business document (e.g., its XML Schema)
   b) The semantics for all the data elements/attributes contained in the business document
   c) A human representation for business document, that the defines how the sender of that document would like the document to appear to the recipient (e.g., PDF, HTML)
   d) The mapping rules for mapping the wire representation to a human readable representation. This requires one partner to know the capabilities of other participants for representing the document as, e.g., PDF, HTML, etc.
   e) The validation rules that define what constitutes a "valid" business document. This goes beyond the capabilities of XML Schema Validation to potentially include lists of valid values for document content, cross-element validation, and checks against internal or external databases (e.g., to check that a product code is valid)
   f) The document transformation rules that can be used to map one or perhaps more, business documents to a related document (e.g., an Order to an Order Response or perhaps an Invoice). The transformations that are valid will depend on the choreography.
   g) The data entry rules that define which parts of a business document a role is allowed to complete. This is related to document transformation rules in that a document that is created by following document transformation rules will need further data entry rules that define which parts of the resulting document the role can complete.
3. The Messaging Technology that will be used to exchange business documents. This information may include, for example:
   a) Transport protocols (e.g., HTTP and/or SMTP)
   b) Transport level security (e.g., HTTPS and/or S/MIME)
   c) "Envelope" structures (e.g., SOAP and its associated SOAP headers such as WS Addressing)
   d) Attachments (e.g., WS Attachments vs. MTOM)
   e) Reliable messaging protocols (e.g., WS-Reliable Exchange)
   f) Message integrity (e.g., using digital signatures)
   g) Message privacy (e.g., using encryption)
4. The Identity of the participants in the process. This information may include, for example:
   a) Participant identity, i.e., methods of identifying a participant at different levels such as the organization (company level), a sub division of an organization (e.g., a department), a role within an organization (e.g., a buyer, an individual person within an organization, a computer/server, or a program/application)
   b) The addresses expressed as email or http addresses of the business collaboration applications used by each company
   c) Participant authentication, i.e., how a participant is authenticated (e.g., by using digital signatures and certificates)
   d) Participant trust, i.e., how one participant knows another participant can be trusted (e.g., by comparing a certificate with one in a certificate store, or by following a certificate chain to the certificate root)
   e) Message authorization, i.e., how to determine if a message received from a participant is authorized (e.g., by comparing certificate content with message attributes)
   f) Message non-repudiation, i.e., how, after the event, a determination can be made that a message was sent by a particular party.
5. Service-Level related information. This information may include, for example:
   a) Response times (e.g., the expected/required response time for individual messages)
   b) Service availability (e.g., target availability of a service operated by a participant often expressed as a percentage)
   c) Outage notification (e.g., how one participant notifies another of planned outages in a service)
   d) Service status (e.g., how to determine if a server/service is available and accepting/sending messages through using a service availability query)
   e) Message status (e.g., how to determine the status of the processing of a message, for example, by using a message status query
   f) Service Level Performance (e.g., how one participant monitors that another participant is performing as per the agreed service levels)
6. Contract/Terms-of-Business information. This information may include, for example:
   a) The legal or other business terms and conditions under which the collaborative business process is executed. This can be one-sided, for example by a supplier declaring the terms under which their products may be purchased. Alternatively it may be based on a mutually agreed contract. This contract/terms information will likely be in the form of a PDF, although some data may be machine-processable.
   b) Contact information for who to get in touch with if everything else fails, this could be a customer service telephone number, an email address, a portal on a web page, or a postal address
7. Connection Agreement related information. This information may include, for example:
   a) Connection Agreement Identifier that uniquely identifies a Connection Agreement
   b) Connection Agreement Timestamp that indicates the date/time when the Connection Agreement was created
   c) Negotiation Process Identifier, which identifies the instance of the process that resulted in the creation of the Connection Agreement
   d) Connection Agreement Start and End dates/times that indicate when the Connection Agreement should be used
   e) Connection Capability Identifiers that identify the Connection Capability Data that was used to create the Connection Agreement
   f) Connection Negotiation Participants that identify what and who was involved in creating the Connection Agreement. This may include: the make and version of the Connection Management Software used by each Company, the names, contact details, address etc. of the individual who participated in setting up and/or approving the Connection Agreement

It should be noted that the specific connectivity parameters set forth above are not required for complying with the underlying principles of the invention. Rather they are provided merely for the purpose of illustration. Moreover, various additional parameters may be included within the Connection Capability Data and Connection Agreement while still complying with the underlying principles of the invention.

One embodiment of the invention is implemented as software specifically designed for use by small to medium sized businesses that may be downloaded over the Internet or provided by other means (e.g., via a CD ROM). This software when downloaded and installed by a small business includes built-in support for popular business documents, business processes and messaging protocols, some of which are mentioned above. This implementation thereby allows a small business having personnel with limited or no computer skills to successfully exchange business documents and carry out commerce with larger companies that have computing skills (as well as similar small businesses).

As mentioned above, the connection capability data and connection agreements may be defined using XML. In addition, in one embodiment of the invention, the connection capability data and connection agreements use previously-defined definitions such as XML Business Documents; XML-based business process definitions; XML based messaging protocols such as WS Reliability or WS Reliable Message Exchange; XML based security protocols such as XML Signature, XML Encryption, WS Security and WS Secure Conversation; transport protocols that include both HTTP and SMTP; and messaging protocols that are based on Web services and SOAP.

One embodiment of the invention is implemented as software which allows standards groups for a vertical industry to specify standard or "best practice" template examples of Connection Capability Data and Connection Agreements for their industry which predefine information required by the members of that industry. The members of that industry can then "fill in the blanks" in the template to provide complete connection capability data and connection agreements. For example a vertical standards organization such as CIDX (http://www.cidx.org) could define: collaborative business processes supported; the business documents exchanged; the messaging technology to be used; and the service-related information. Each participant could then add information about the identity of the participants in the process, the contract /terms of business information and the connection agreement related information.

Another embodiment of the invention is implemented as software that can be configured to use a Connection Agreement where that Connection Agreement has been created by only considering the Connection Capability Data of one of the participants (i.e., rather than both as described above).

Embodiments of the invention may include various steps as set forth above. The steps may be embodied in machine-executable instructions which cause a general-purpose or special-purpose processor to perform certain steps. Alternatively, these steps may be performed by specific hardware components that contain hardwired logic for performing the steps, or by any combination of programmed computer components and custom hardware components.

Elements of the present invention may also be provided as a machine-readable medium for storing the machine-executable instructions. The machine-readable medium may include, but is not limited to, flash memory, optical disks, CD-ROMs, DVD ROMs, RAMs, EPROMs, EEPROMs, magnetic or optical cards, propagation media or other type of machine-readable media suitable for storing electronic instructions. For example, embodiments of the invention may be downloaded as a computer program from a remote computer (e.g., a server) to a requesting computer (e.g., a client) via a communication link (e.g., a modem or network connection) and automatically installed on the requesting computer.

Throughout the foregoing description, for the purposes of explanation, numerous specific details were set forth in order to provide a thorough understanding of the invention. It will be apparent, however, to one skilled in the art that the invention may be practiced without some of these specific details.
For example, although "business collaboration applications" are used in the examples provided above, the underlying principles of the invention may be employed within the context of virtually any type of application such as a service-oriented application or a Web services application. Moreover, it should be noted that the logical structures illustrated in Figure 2 and Figure 3 may be implemented as software executed on any type of computing devices including both "clients" and/or "server" computing systems.

Accordingly, the scope and spirit of the invention should be judged in terms of the claims which follow.

## Claims

1. A method for agreeing upon a set of connection parameters for communication between two or more applications:
reading a first data object containing a first set of connection parameters, the first set of connection parameters defining connection capabilities of a first application;
reading a second data object containing a second set of connection parameters, the second set of connection parameters defining connection capabilities of a second application;
one of the applications identifying an initial common subset of the first and second connection parameters as a third data object that defines the behavior of a series of electronic transactions between the first application and the second application;
negotiating an agreed common subset of connection parameters by one application proposing the initial common subset it identified to the other application, wherein other application accepts, declines, or proposes an alternative set of connection parameters;
repeating the negotiating until one of the applications declines or one application proposes and the other application accepts an agreed common subset of connection parameters; and
automatically configuring the first application and the second application with the agreed common subset of connection parameters.

2. The method as in claim 1 wherein the first, second and third data objects are extensible markup language ("XML") files.

3. The method as in any one of the preceding claims, wherein negotiating comprises selecting connection parameters from the first common subset to generate a second common subset based on a predefined prioritization of the connection parameters.

4. The method as in any one of the preceding claims, wherein the connection parameters comprises information on one or more of:
the collaborative business processes supported by the first and second applications;
the document formats supported by the first and second applications;
the messaging protocols supported by the first and second applications;
the identity of the participants in the process;
the service level data that describes how the collaboration is performed;
the contract/terms of business that apply; and
the negotiation process and result of the negotiated agreement.

5. The method as in any one of the preceding claims, wherein the first application is executed on a client or server of a first company and the second application is executed on a client or server of a second company.

6. The method as in any one of the preceding claims, wherein the connection parameters contain start and/or end dates/times which control when the agreed connection parameters in the third object may be used to configure the first and second applications.

7. The method as described in any one of the preceding claims, wherein the agreed upon common subset of connection parameters replaces an existing set of agreed connection parameters.

8. The method as described in any one of the preceding claims, further comprising:
initially downloading program code over a network, the program code, performing the negotiating operations when installed on a computer.

9. A system for agreeing upon a set of connection parameters for communication between two or more applications:
a first data object containing a first set of connection parameters, the first set of connection parameters defining connection capabilities of a first application;
a second data object containing a second set of connection parameters, the second set of connection parameters defining connection capabilities of a second application; and
comparison logic to identify a common subset of the first and second connection parameters as a third data object that defines the behavior of a series of electronic transactions between the first application and the second application;
negotiation logic that results in an agreed common subset of connection parameters by one application proposing the initial common subset it identified to the other application, wherein the other application accepts, declines, or proposes an alternative set of connection parameters;
wherein the negotiation logic performs the foregoing operation until one of the applications declines; or, one application proposes and the other application accepts a single agreed common subset of connection parameters; and
configuration logic to automatically configure the first application and the second application with the agreed upon common subset of connection parameters.

10. The system as in claim 9 wherein the first, second and third data objects are extensible markup language ("XML") files.

11. The system as in claim 9 or 10, wherein negotiating performed by the negotiation logic comprises selecting connection parameters from the first common subset to generate a second common subset based on a predefined prioritization of the connection parameters.

12. The system as in any one of the preceding claims 9 to 11, wherein the connection parameters comprise information on one or more of:
the collaborative business processes supported by the first and second applications;
the document formats supported by the first and second applications;
the messaging protocols supported by the first and second applications;
the identity of the participants in the process;
the service level data that describes how the collaboration is performed;
the contract/terms of business that apply; and
the negotiation process and result of the negotiated agreement.

13. The system as in any one of the preceding claims 9 to 12, wherein the first application is executed on a client or server of a first company and the second application is executed on a client or server of a second company.

14. The system as in any one of the preceding claims 9 to 13, wherein the connection parameters contain start and/or end dates/times to control when the agreed connection parameters in the third object may be used to configure the first and second applications.

15. The system as in any one of the preceding claims 9 to 14, wherein the agreed upon common subset of connection parameters replaces an existing set of agreed connection parameters.

16. A machine-readable medium having program code stored thereon which, when executed by a machine, causes the machine to perform the operations of:
reading a first data object containing a first set of connection parameters, the first set of connection parameters defining connection capabilities of a first application;
reading a second data object containing a second set of connection parameters, the second set of connection parameters defining connection capabilities of a second application;
one of the applications identifying an initial common subset of the first and second connection parameters as a third data object that defines the behavior of a series of electronic transactions between the first application and the second application;
negotiating an agreed common subset of connection parameters by one application proposing the initial common subset it identified to the other application, wherein other application accepts, declines, or proposes an alternative set of connection parameters;
repeating the negotiating until one of the applications declines or one application proposes and the other application accepts an agreed common subset of connection parameters; and
automatically configuring the first application and the second application with the agreed common subset of connection parameters.

17. The machine-readable medium as in claim 16 wherein the first, second and third data objects are extensible markup language ("XML") files.

18. The machine-readable medium as in claim 16 or 17, wherein negotiating comprises selecting connection parameters from the first common subset to generate a second common subset based on a predefined prioritization of the connection parameters.

19. The machine-readable medium as in any one of the preceding claims 16 to 18, wherein the connection parameters comprises information on one or more of:
the collaborative business processes supported by the first and second applications;
the document formats supported by the first and second applications;
the messaging protocols supported by the first and second applications;
the identity of the participants in the process;
the service level data that describes how the collaboration is performed;
the contract/terms of business that apply; and
the negotiation process and result of the negotiated agreement.

20. The machine-readable medium as in any one of the preceding claims 16 to 19, wherein the first application is executed on a client or server of a first company and the second application is executed on a client or server of a second company.

21. The machine-readable medium as in any one of the preceding claims 16 to 20, wherein the connection parameters contain start and/or end dates/times which control when the agreed connection parameters in the third object may be used to configure the first and second applications.

22. The machine-readable medium as described in any one of the preceding claims 16 to 21, wherein the agreed upon common subset of connection parameters replaces an existing set of agreed connection parameters.
